# FASCICULE DE BREVET EUROPEEN

(11) **EP 4 448 382 B1**
(45) Date de publication et mention de la délivrance du brevet: **15.10.2025**
(21) Numéro de dépôt: 22840793.8
(22) Date de dépôt: 12.12.2022
(51) Int. Cl.: B64C 11/38, F01D 7/00, F04D 29/36, F04D 25/06

(54) **ENSEMBLE HYDRAULIQUE POUR UN MOTEUR D'AERONEF**
HYDRAULIKBAUGRUPPE FÜR EIN FLUGZEUGTRIEBWERK
HYDRAULIC ASSEMBLY FOR AN AIRCRAFT ENGINE

(30) Priorité: 17.12.2021 FR 2113870
(43) Date de publication de la demande: 23.10.2024
(73) Titulaire: SAFRAN AIRCRAFT ENGINES, 75015 Paris (FR); Safran Landing Systems, 78140 Vélizy-Villacoublay (FR)
(72) Inventeur: KAMIS, Jean-Baptiste, 77550 MOISSY-CRAMAYEL (FR); PETTENAZZI, Christelle, 77550 MOISSY-CRAMAYEL (FR); FRANTZ, Caroline Marie, 77550 MOISSY-CRAMAYEL (FR)
(74) Mandataire: Gevers & Orès
(86) Numéro de dépôt international: PCT/FR2022/052318
(87) Numéro de publication internationale: WO 2023/111438

(56) Documents cités:
- EP-A1- 3 179 044
- FR-A1- 2 831 225
- FR-A1- 3 087 232

## Description

### Domaine technique de l'invention

L'invention concerne le domaine des pompes et des unités de transfert hydraulique pour les moteurs d'aéronef, en particulier les turbomachines d'aéronef.

En particulier, l'invention concerne le domaine des pompes et des unités de transfert hydraulique pour alimenter en fluide un dispositif de commande électro hydraulique d'aubes à angle de calage variable.

### Arrière-plan technique

L'état de la technique est illustré par le document EP-A1-3 179 044.

Classiquement, les moteurs d'aéronef sont constitués par une turbomachine. Une turbomachine d'aéronef comprend de manière générale un module s'étendant autour d'un axe longitudinal et présentant un moyeu mobile en rotation autour de l'axe longitudinal et sur lequel sont montées des aubes. Le module est typiquement relié à un générateur de gaz. Le générateur de gaz comprend par exemple d'amont en aval un compresseur basse pression, un compresseur haute pression, une chambre de combustion, une turbine haute pression, une turbine basse pression et une tuyère d'échappement des gaz. Le rotor du compresseur haute pression est relié au rotor de la turbine haute pression par un arbre haute pression et le rotor du compresseur basse pression est relié au rotor de la turbine basse pression par un arbre basse pression. L'arbre basse pression est par ailleurs relié à un arbre d'entrainement du moyeu du module pour l'entrainer en rotation. Le module est par exemple une soufflante ou une hélice. Dans le cas d'une soufflante, les aubes sont entourées d'un carter externe fixé à une nacelle de l'aéronef. Dans le cas d'une hélice, les aubes de soufflante sont montées en dehors de la nacelle et ne sont pas donc entourées par un carter externe.

Afin d'optimiser le fonctionnement du module et assurer son opérabilité selon les phases de vol de l'aéronef notamment en maintenant une marge au pompage suffisante, il est connu de modifier l'orientation des aubes au cours du vol de l'aéronef. A cet effet, les aubes sont mobiles autour d'un axe de calage qui s'étend radialement par rapport à l'axe longitudinal. Les aubes sont dites à calage ou à pas variable. Par exemple, les aubes à calage variable peuvent occuper une position dite d'inversion de poussée (connue sous le terme anglais « reverse ») dans laquelle celles-ci permettent de générer une contre poussée pour participer au ralentissement de l'aéronef et une position de mise en drapeau dans laquelle, en cas de défaillance ou de panne, celles-ci permettent de limiter leur résistance.

Afin d'entrainer en rotation les aubes autour de leurs axes de calage, le module de la turbomachine comprend typiquement un dispositif de commande des aubes à calage variable, agencé à l'intérieur du moyeu du module. Le document FR-A1-3 087 232 décrit une turbomachine comprenant un module de soufflante présentant un moyeu mobile autour d'un axe longitudinal et sur lequel sont montées des aubes à calage variable. Le module comprend un dispositif de changement de calage des aubes comprenant un actionneur hydraulique relié aux aubes, une pompe d'alimentation en fluide de l'actionneur hydraulique et un moteur électrique pour actionner la pompe d'alimentation.

Selon ce document, la pompe d'alimentation est mobile en rotation autour de l'axe longitudinal et le moteur électrique est mobile autour de l'axe longitudinal c'est-à-dire que l'organe fixe du moteur, également appelé stator, est fixé au moyeu du module et est donc dans un repère tournant du module. Le dispositif de changement de calage des aubes comprend en outre un transformateur électrique tournant permettant d'alimenter en énergie électrique le moteur à partir d'une source d'énergie électrique située dans un repère fixe de la turbomachine.

Le document FR-A1-2 831 225 décrit une turbomachine comprenant un module de soufflante présentant un moyeu mobile autour d'un axe longitudinal et sur lequel sont montées des aubes à calage variable. Le module comprend un dispositif de changement de calage des aubes comprenant un actionneur hydraulique, une pompe d'alimentation en fluide de l'actionneur hydraulique et un moteur électrique pour actionner la pompe d'alimentation. Selon ce document, la pompe d'alimentation et le moteur électrique sont mobiles en rotation autour de l'axe longitudinal. Dans ce cadre, le dispositif de changement de calage des aubes comprend en outre un transformateur électrique tournant permettant d'alimenter en énergie électrique le moteur à partir d'une source d'énergie électrique située dans un repère fixe de la turbomachine.

Ces configurations ne donnent pas entière satisfaction en ce que le moteur électrique est entrainé en permanence en rotation conduisant à une consommation de puissance électrique et un dimensionnement du moteur important. Par ailleurs, le module de la turbomachine présente un encombrement qui rend difficile l'ajout d'un transformateur électrique. L'ajout d'un transformateur implique d'augmenter la taille du module. Aussi, la masse et le coût du transformateur sont importants. De plus, l'entrainement en rotation de la pompe d'alimentation autour de l'axe de la turbomachine est problématique. En effet, il a été constaté qu'à de grandes vitesses d'entrainement en rotation du module, la pompe pouvait subir des dommages irréversibles.

Il existe donc un besoin de fournir une solution permettant d'alimenter en fluide l'actionneur de manière fiable, sans augmenter la taille et la masse du module, et à moindre coût.

### Résumé de l'invention

A cet effet, l'invention propose un ensemble hydraulique pour un moteur d'aéronef, l'ensemble comprenant:
- une pompe comprenant un carter et un rotor agencé à l'intérieur du carter, le carter présentant au moins une conduite hydraulique pour le passage d'un fluide, et
- une unité de transfert hydraulique comprenant :
   - un bloc de transfert hydraulique fixé au carter et comprenant un canal interne de passage du fluide qui communique avec la conduite hydraulique, et
   - une enveloppe qui recouvre le bloc de transfert et qui est guidée en rotation autour d'un axe de révolution et autour du bloc de transfert, l'enveloppe présentant un port de sortie de fluide qui communique avec le canal interne. De préférence, le carter est destinée à être solidaire d'une partie fixe du moteur et l'enveloppe est destinée à être solidaire d'une partie mobile en rotation du moteur.

De préférence, l'invention concerne un ensemble hydraulique pour un module de moteur d'aéronef, le module s'étendant autour d'un axe longitudinal et comprenant :
- un moyeu mobile en rotation autour de l'axe longitudinal,
- des aubes portées par le moyeu, chacune de ces aubes étant mobiles en rotation autour d'un axe de calage s'étendant radialement par rapport à l'axe longitudinal, et
- un dispositif de commande des aubes, ce dispositif de commande comprenant :
   - un actionneur hydraulique mobile en rotation autour de l'axe longitudinal et configuré pour entrainer en rotation les aubes autour de leurs axes de calage, l'ensemble hydraulique comprenant :
      - une pompe comprenant un carter et un rotor agencé à l'intérieur du carter, le carter présentant au moins une conduite hydraulique pour le passage d'un fluide, et
      - une unité de transfert hydraulique comprenant :
         - un bloc de transfert hydraulique fixé au carter et comprenant un canal interne de passage du fluide qui communique avec la conduite hydraulique, et
         - une enveloppe qui recouvre le bloc de transfert et qui est destinée à être guidée en rotation autour d'un axe de révolution et autour du bloc de transfert, l'enveloppe étant en particulier solidaire en rotation de l'actionneur hydraulique, l'enveloppe présentant un port de sortie de fluide qui communique avec le canal interne.

L'ensemble hydraulique selon l'invention comprend une pompe dont le carter est destiné à être fixe en rotation dans le module de la turbomachine et donc relié à un élément fixe de la turbomachine. Un tel carter est destiné à être relié à un moteur électrique pour alimenter la pompe qui lui-même est fixe en rotation. En outre, l'ensemble selon l'invention comprend une unité de transfert hydraulique qui permet de transférer le fluide de la pompe à l'actionneur hydraulique qui lui est dans un repère tournant de la turbomachine c'est-à-dire qu'il est relié à un rotor de la turbomachine. Selon l'invention, l'unité de transfert hydraulique comprend un bloc de transfert relié au carter. Pour permettre le passage de fluide, une conduite hydraulique est agencée dans le carter de la pompe et communique avec un canal interne du bloc de transfert.

Le bloc de transfert est entouré par une enveloppe qui elle est montée mobile en rotation autour du bloc de transfert. On comprend ainsi que l'enveloppe est destinée à être reliée à l'actionneur hydraulique. Pour permettre le transfert de fluide, l'enveloppe comprend un port de sortie qui communique avec le canal.

L'invention propose ainsi un ensemble intégré comprenant la pompe et l'unité de transfert hydraulique. Grâce à l'invention, il est possible d'agencer la pompe dans un repère fixe de la turbomachine ainsi que le moteur. Ceci permet de s'affranchir d'un transfert électrique tournant qui est encombrant et augmente considérablement la masse de la turbomachine.

En outre, l'ensemble est peu volumineux puisque le carter est directement fixé au bloc hydraulique de l'unité de transfert. Par ailleurs, l'enveloppe de l'unité de transfert est guidée en rotation autour du bloc de transfert qui lui est fixé au carter de la pompe. Ceci permet de garantir l'étanchéité de l'ensemble puisque le nombre de pièces composant l'ensemble hydraulique est réduit.

L'invention peut comprendre une ou plusieurs des caractéristiques suivantes, prises isolément les unes des autres ou en combinaison les unes avec les autres :
- un pion relie le carter et le bloc de transfert,
- au moins un joint d'étanchéité dynamique annulaire est agencé entre l'enveloppe et le bloc de transfert,
- l'enveloppe recouvre au moins en partie le carter,
- l'enveloppe est guidée en rotation par au moins un palier à roulements agencé autour du carter,
- le canal interne est raccordé fluidiquement à la conduite hydraulique par un raccord fluidique annulaire,
- le bloc de transfert est relié au carter par vissage,
- le carter comprend une seconde conduite hydraulique en communication fluidique avec un second canal interne ménagé dans le bloc de transfert, l'enveloppe présentant un second port de sortie qui communique avec le second canal interne,
- un drain est agencé dans le bloc de transfert et débouche dans le carter, le drain étant en communication fluidique avec un espace annulaire situé entre l'enveloppe et le bloc de transfert.

L'invention concerne également un module pour un moteur d'aéronef, s'étendant autour d'un axe longitudinal et comprenant :
- un moyeu mobile en rotation autour de l'axe longitudinal,
- des aubes portées par le moyeu, chacune de ces aubes étant mobiles en rotation autour d'un axe de calage s'étendant radialement par rapport à l'axe longitudinal, et
- un dispositif de commande des aubes, ce dispositif de commande comprenant :
   - un actionneur hydraulique mobile en rotation autour de l'axe longitudinal et configuré pour entrainer en rotation les aubes autour de leurs axes de calage, et
   - un ensemble hydraulique selon l'une quelconque des caractéristiques précédentes, le carter de la pompe étant fixe en rotation autour de l'axe longitudinal et le port de sortie de l'enveloppe de l'unité de transfert étant raccordé à l'actionneur pour le transfert de fluide de la pompe à l'actionneur,
   - de préférence, l'enveloppe est solidaire en rotation de l'actionneur hydraulique.

### Brève description des figures

D'autres caractéristiques et avantages ressortiront de la description qui suit d'un mode de réalisation non limitatif de l'invention en référence aux dessins annexés sur lesquels :
[Fig.1] la figure 1 est une représentation schématique en coupe axiale d'une demi-turbomachine d'aéronef ;
[Fig.2] la figure 2 est une vue en coupe axiale d'un module de turbomachine selon un exemple de réalisation de l'invention ;
[Fig.3] la figure 3 est une représentation schématique fonctionnelle du module de la figure 2 ;
[Fig.4] la figure 4 est une vue en coupe axiale d'un ensemble hydraulique selon l'invention ;
[Fig. 5] la figure 5 est une représentation en perspective de l'unité de transfert équipant l'ensemble hydraulique selon l'invention ;
[Fig.6] la figure 6 est une vue en coupe axiale d'un exemple de montage du moteur électrique sur le carter de la pompe de l'ensemble hydraulique.

### Description détaillée de l'invention

Un aéronef comprend par exemple un fuselage et au moins deux ailes s'étendant de part et d'autre du fuselage suivant l'axe du fuselage. Au moins un moteur est monté dans l'aéronef. Par exemple, au moins un moteur est monté sous chaque aile.

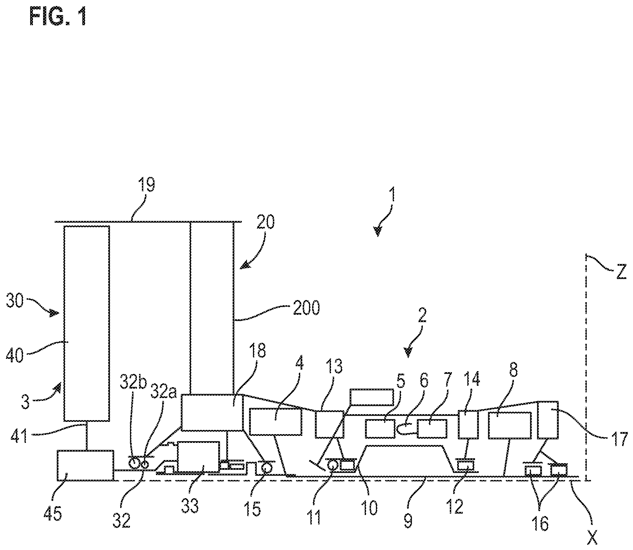

Le moteur est par exemple un moteur électrique ou un moteur à combustion. Le moteur à combustion est par exemple une turbomachine. La turbomachine peut être un turboréacteur, par exemple une turbomachine équipée d'une soufflante carénée équipée d'aubes à calage variable, connue sous l'acronyme VPF pour « Variable Pitch Fan » en langue anglaise. Alternativement, la turbomachine peut être un turbopropulseur, par exemple une turbomachine équipée d'une hélice non carénée (« open rotor », « USF » pour «Unducted Single Fan » ou « UDF » pour « Unducted Fan »). Bien entendu l'invention s'applique à d'autres types de turbomachine et d'aéronef. Dans la présente invention, sauf précision précisant un autre référentiel, les termes « amont », « aval » « axial » et « axialement » sont définis par rapport à la circulation des gaz dans la turbomachine et ici suivant l'axe longitudinal X (et même de gauche à droite sur la figure 1). De même, les termes « radial », « radialement », « interne », « intérieur », « externe » et « extérieur » sont définis par rapport à un axe radial Z perpendiculaire à l'axe longitudinal X et au regard de l'éloignement par rapport à l'axe longitudinal X.

La figure 1 illustre un exemple de turbomachine 1. La turbomachine 1 comprend un générateur de gaz 2 et un module 3 selon l'invention. Le générateur de gaz 2 comprend d'amont en aval, un compresseur basse pression 4, un compresseur haute pression 5, une chambre de combustion 6, une turbine haute pression 7 et une turbine basse pression 8. Les rotors du compresseur basse pression 4 et de la turbine basse pression 8 sont reliés mécaniquement par un arbre basse pression 9 de manière à former un corps basse pression. Les rotors du compresseur haute pression 5 et de la turbine haute pression 7 sont reliés mécaniquement par un arbre haute pression 10 de manière à former un corps haute pression. L'arbre haute pression 10 s'étend radialement au moins en partie à l'extérieur de l'arbre basse pression 9. L'arbre basse pression 9 et l'arbre haute pression 10 sont coaxiaux. Le corps haute pression est guidé en rotation autour de l'axe longitudinal X par un premier palier 11 à roulements en amont et un deuxième palier 12 à roulements en aval. Le premier palier 11 est monté entre un carter inter-compresseur 13 et une extrémité amont de l'arbre haute pression 10. Le carter inter compresseur 13 est agencé axialement entre les compresseurs basse et haute pression 4, 5. Le deuxième palier 12 est monté entre un carter inter-turbine 14 et une extrémité aval de l'arbre haute pression 10. Le carter inter-turbine 14 est agencé axialement entre les turbines basse et haute pression 8, 7. Le corps basse pression est guidé en rotation autour de l'axe longitudinal X via un troisième palier 15 à roulements et un quatrième palier 16 à roulements. Le quatrième palier 16 est par exemple un palier double. Le quatrième palier 16 est monté entre un carter d'échappement 17 et une extrémité aval de l'arbre basse pression 9. Le carter d'échappement 17 est situé en aval de la turbine basse pression 8. Le troisième palier 15 est monté entre un carter d'entrée 18 et une extrémité amont de l'arbre basse pression 9. Le carter d'entrée 18 est agencé en amont du compresseur basse pression 4. Plus particulièrement, le carter d'entrée 18 est agencé axialement entre le module 3 et le compresseur basse pression 4.

Dans l'exemple de la figure 1, le module 3 est monté en amont du générateur de gaz 2. Avantageusement, selon cet exemple, un redresseur 20 est agencé axialement entre le module 3 et le compresseur basse pression 4. Le redresseur 20 comprend par exemple des aubes 200 montées sur le carter d'entrée 18. De telles aubes 200 sont appelées OGV pour « Outlet Guide Vanes » en langue anglaise. Le redresseur 20 permet de redresser le flux en aval du module 3 pour optimiser le fonctionnement de la turbomachine 1.

Selon un autre mode de réalisation non représenté, le module 3 est monté en aval du générateur de gaz 2.

En outre, le module 3 selon l'invention comprend des aubes 30.

Dans l'exemple de la figure 1, les aubes 30 sont entourées par un carter externe 19. Le carter externe 19 est fixé à une nacelle (non représentée) entourant le carter externe 19. Selon cet exemple, le module 2 est un module de soufflante.

Selon un autre exemple non représenté, le module 2 est un module d'hélice. Les aubes 30 ne sont pas entourées par un carter externe. Les aubes 30 sont selon cet exemple agencées autour de la nacelle.

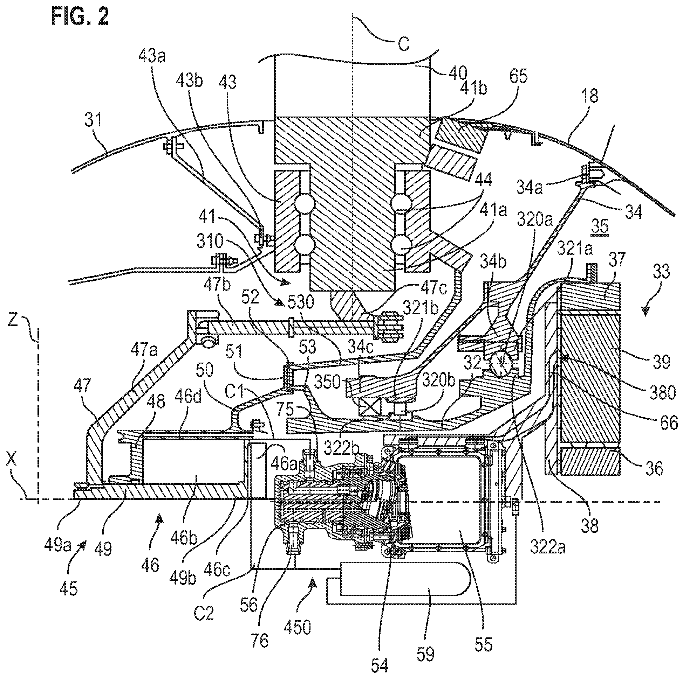

Comme visible sur la figure 2, les aubes 30 sont portées par un moyeu 43. Le moyeu 43 est annulaire. Il est agencé autour de l'axe longitudinal X. Les aubes 30 sont régulièrement réparties autour du moyeu 43. Les aubes 30 s'étendent radialement depuis le moyeu 43. Il comprend un espace interne 310. Le moyeu 43 comprend en outre des logements internes répartis régulièrement autour de l'axe longitudinal X.

Le moyeu 43 est solidaire d'un cône 31 centré sur l'axe longitudinal X. Le cône 31 est agencé en amont du moyeu 43. Le cône 31 forme un bec d'entrée d'air dans la turbomachine 1. Le moyeu 43 est par exemple relié au cône 31 par un bras de fixation 43a s'étendant radialement par rapport à l'axe longitudinal X. Le bras de fixation 43a est relié au cône 31 et au moyeu 43 par un ensemble de vis et d'écrous 43b par exemple.

Les aubes 30 sont entrainées en rotation autour de l'axe longitudinal X. Chaque aube 30 comprend un pied 41 et une pale 40 s'étendant radialement vers l'extérieur depuis le pied 41.

Le pied 41 comprend un tenon 41b relié à un manchon 41a. Le pied 41 est monté pivotant suivant un axe de calage C dans le logement interne du moyeu 43. Le manchon 41a est centré sur l'axe de calage C. Le manchon 41a est logé dans le logement interne du moyeu 43. Avantageusement, un pied 41 est monté par logement interne.

L'axe de calage C est parallèle à l'axe radial Z. Le pied 41 est monté pivotant grâce à deux paliers de guidage 44 montés dans chaque logement interne et de manière superposée suivant l'axe radial Z. Ces paliers 44 sont de préférence, mais non limitativement, des roulements à billes.

Le moyeu 43 est mobile en rotation autour de l'axe longitudinal X. Pour entrainer le moyeu 43 en rotation autour de l'axe longitudinal X et donc les aubes 30, le module 3 comprend un arbre d'entrainement 32. L'arbre d'entrainement 32 est agencé au moins en partie dans l'espace interne 310. Il est centré sur l'axe longitudinal X. L'arbre d'entrainement 32 est guidé en rotation dans l'espace interne 310 par un premier palier de guidage 32a et un second palier de guidage 32b. Le premier palier de guidage 32a est par exemple un roulement à billes. Le second palier de guidage 32b est par exemple un roulement à rouleaux. Le premier palier de guidage 32a est agencé en aval du second palier de guidage 32b. Le premier palier de guidage 32a comprend des billes 320a agencées entre une bague externe 321a et une bague interne 322a. Le second palier de guidage 32b comprend des rouleaux 320b agencés entre une bague externe 321b et une bague interne 322b. Les bagues internes 322a, 322b sont solidaires de l'arbre d'entrainement 32 et les bagues externes 321a, 321b sont portées par un support palier 34. Le support palier 34 est fixe. Il s'étend radialement entre une bride d'extrémité 34a reliée au carter d'entrée 18 et des première et seconde semelles 34b, 34c qui coopèrent respectivement avec les bagues externe 321a, 321b.

L'arbre d'entrainement 32 comprend une extrémité amont sur laquelle est fixé un tourillon 53. Le tourillon 53 s'étend radialement vers l'extérieur. Le tourillon 53 est relié par exemple par une première bride 52 à un bras intermédiaire 530 lui-même relié au moyeu 43 pour l'entrainer en rotation autour de l'axe longitudinal X.

L'arbre d'entrainement 32 est entrainé en rotation par l'arbre basse pression 9 par exemple.

Afin de réduire la vitesse de rotation de l'arbre d'entrainement 32 par rapport à l'arbre basse pression 9, le module 3 comprend avantageusement un réducteur de vitesse 33 mécanique. Le réducteur de vitesse 33 est agencé dans une enceinte de lubrification 35 s'étendant axialement entre le troisième palier 15 et le second palier de guidage 32b. L'enceinte de lubrification 35 est agencée par exemple dans le carter d'entrée 18. Afin de limiter les fuites de lubrifiant en dehors de l'enceinte de lubrification 35, un dispositif d'étanchéité 350 est agencé en amont du second palier 32b. Le dispositif d'étanchéité 350 comprend par exemple un joint d'étanchéité dynamique.

Le réducteur de vitesse 33 comprend un premier élément 36 qui coopère avec l'arbre basse pression 9, un second élément 37 solidaire en rotation de l'arbre d'entrainement 32 et un troisième élément 38 fixe en rotation. Le troisième élément 38 est par exemple relié à un stator de la turbomachine 1 tel que le carter d'entrée 18 ou du module 3. Le réducteur de vitesse 33 comprend en outre des satellites 39.

Le premier élément 36 est un planétaire intérieur couplé en rotation avec l'arbre basse pression 9, le second élément 37 est une couronne extérieure couplée en rotation avec l'arbre d'entrainement 32 et le troisième élément 38 est un porte-satellites fixe en rotation par rapport à l'axe longitudinal X. Le porte-satellites est par exemple solidaire du carter d'entrée 18. Le porte-satellites présente au moins un passage 380. Le passage 380 est traversant. Dans cette configuration du réducteur 33, les satellites 39 sont portés par le troisième élément 38 et tournent chacun autour d'un axe sensiblement parallèle à l'axe longitudinal X. Chaque satellites 39 engrène avec le premier élément 36 et le second élément 37. Les satellites 39 sont disposés radialement entre le premier élément 36 et le second élément 37. Dans cette configuration, le premier élément 36 qui est le planétaire forme l'entrée du réducteur de vitesse 33 tandis que le second élément 37 qui est la couronne extérieure forme la sortie du réducteur de vitesse 33. Le réducteur de vitesse 33 est un réducteur de vitesse 33 à train d'engrenage planétaire.

Les aubes 30 sont à angle de calage variable. Chaque aube 30 est donc mobile en rotation autour de l'axe de calage C. A cet effet, selon l'invention, le module 3 comprend un dispositif 45 de commande des aubes 30 pour commander la rotation des aubes 30 autour de leurs axes de calage C.

Le dispositif 45 est un dispositif électrohydraulique. Le dispositif 45 est agencé au moins en partie dans l'espace interne 310 du moyeu 43. Le dispositif 45 est agencé en amont du réducteur de vitesse 33.

Le dispositif 45 comprend un actionneur 46 hydraulique qui est mobile en rotation autour de l'axe longitudinal X et configuré pour entrainer les aubes 30 autour de leurs axes de calage C. L'actionneur 46 est par exemple un vérin hydraulique.

L'actionneur 46 comprend un boitier 48 et un corps mobile 49 en translation dans le boitier 48. Le boitier 48 est solidaire en rotation de l'arbre d'entrainement 32. Le boitier 48 est cylindrique, centré sur l'axe longitudinal X. Une telle configuration permet de limiter l'encombrement de l'actionneur 46 dans le moyeu 43 tant axialement que radialement. Le boitier 48 comprend une virole 50 qui s'étend radialement vers l'extérieur depuis une surface externe du boitier 48. La virole 50 comprend une deuxième bride 51 qui est fixée à la première bride 52 du tourillon 53.

Le corps mobile 49 se déplace en translation le long de l'axe longitudinal X dans le boitier 48. Le boitier 48 s'étend radialement autour du corps mobile 49. Le corps mobile 49 se présente sous la forme d'une tige axiale qui s'étend entre une première extrémité 49a et une deuxième extrémité 49b. L'actionneur 46 comprend en outre une première chambre 46a et une seconde chambre 46b. Les première et seconde chambres 46a, 46b sont délimitées axialement par une paroi radiale 46c agencée dans le boitier 48. La paroi radiale 46c est solidaire de la deuxième extrémité 49b du corps mobile 49. Le corps mobile 49 se déplace en translation sous l'effet de la pression d'un fluide circulant dans chaque chambre 46a, 46b.

L'actionneur 46 comprend en outre une canalisation 46d. La canalisation 46d présente un axe parallèle à l'axe longitudinal X. La canalisation 46d est par exemple ménagée dans une paroi externe du boitier 48. La canalisation 46d débouche dans la seconde chambre 46b.

Le dispositif 45 comprend avantageusement un mécanisme de liaison 47 solidaire des aubes 30 et de l'actionneur 46. Le mécanisme de liaison 47 permet de transformer le mouvement de translation de l'actionneur hydraulique 46 en un mouvement de rotation des aubes 30. Le mécanisme de liaison 47 comprend une pièce annulaire 47a, une biellette 47b et un excentrique 47c. La pièce annulaire 47a est fixée de manière amovible au corps mobile 49 et par exemple à la première extrémité 49a. La pièce annulaire 47a comprend une bride de liaison qui est reliée de manière amovible à la biellette 47b. La biellette 47b coopère avec l'excentrique 47c qui est solidaire de l'aube 30 et notamment relié au pied 41 de l'aube 30. La pièce annulaire 47a permet ainsi un démontage de l'actionneur hydraulique 46 lors d'opérations de maintenance par exemple sans intervenir sur les aubes 30 qui restent fixées aux biellettes 47b par l'intermédiaire de l'excentrique.

Afin d'entrainer en translation le corps mobile 49 pour entrainer les aubes 30 autour de leurs axes de calage C via le mécanisme de liaison 47, le dispositif 45 selon l'invention comprend en outre un ensemble hydraulique 450.

L'ensemble hydraulique 450 comprend une pompe 54 pour alimenter en fluide l'actionneur 46 et une unité de transfert 56 hydraulique pour transférer le fluide de la pompe 54 à l'actionneur 46.

L'ensemble hydraulique 450 est agencé axialement entre le réducteur 33 et l'actionneur hydraulique 46. L'ensemble hydraulique 450 est notamment agencé à l'intérieur de l'arbre d'entrainement 32 dans l'espace interne 310 afin de réduire l'encombrement du module 3.

La pompe 54 est une pompe à cylindrée fixe et présentant avantageusement deux sens de rotation (pompe réversible).La pompe 54 est par exemple une pompe à piston axial à plateau incliné.

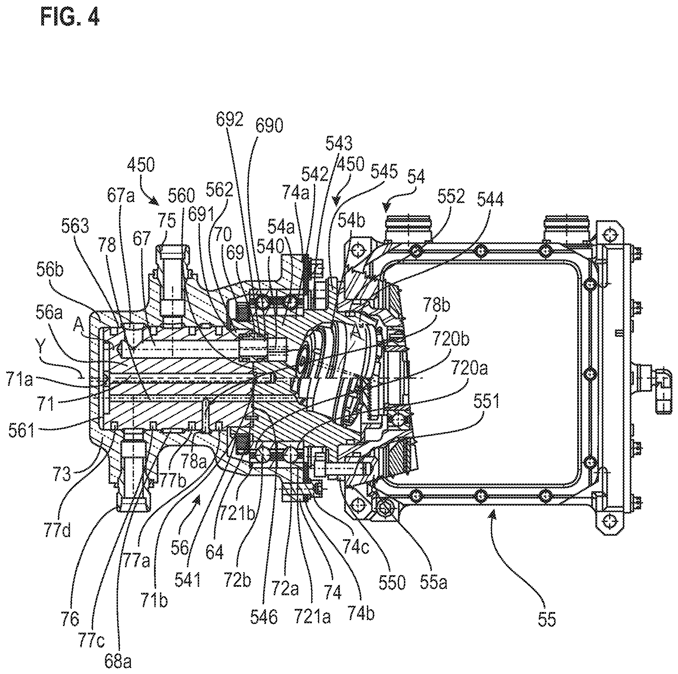

Comme mieux visible sur la figure 4, la pompe 54 comprend un carter 54a et un rotor 54b agencé à l'intérieur du carter 54a. Le rotor 54b est monté mobile en rotation dans le carter 54a autour d'un axe de rotation A'. Le rotor 54b est cylindrique et s'étend selon l'axe de rotation A'. L'axe de rotation A' est par exemple incliné par rapport à l'axe longitudinal X de la turbomachine 1 lorsque l'ensemble hydraulique 450 est monté dans le module 3.

La pompe 54 comprend en outre des pistons (non visibles sur la figure 4) agencés autour du rotor 54b et dans le carter 54a. L'axe de chaque piston est parallèle à l'axe de rotation A'. Avantageusement, la pompe 54 comprend par exemple au moins trois pistons, tels que sept pistons ou neuf pistons. La pompe 54 comprend en outre un plateau (non visible sur la figure 4) agencé autour du rotor 54b et solidaire en rotation de ce dernier. Le plateau est avantageusement inclinable par rapport à l'axe de rotation A'. Par ailleurs, chaque piston est par exemple relié au plateau par l'intermédiaire d'une liaison rotule par exemple. Chaque piston est apte à communiquer avec une chambre d'admission du fluide lors de la rotation du rotor 54b.

Le carter 54a est fixe en rotation. Le carter 54a est cylindrique et centré sur un axe de révolution Y. L'axe de révolution Y est confondu avec l'axe longitudinal X de la turbomachine 1 lorsque l'ensemble hydraulique 450 est monté dans le module 3. Le carter 54a comprend par exemple une première portion cylindrique 541 opposée au plateau, une seconde portion cylindrique 542, une troisième portion cylindrique 543 et une quatrième portion cylindrique 544 opposée à la première portion cylindrique 541. Le carter 54a comprend en outre une bride 545 agencée entre les troisième et quatrième portions cylindriques 543, 544. La bride 545 s'étend radialement vers l'extérieur par rapport à l'axe de révolution Y.

Préférentiellement, la première portion cylindrique 541 est creuse et taraudée.

Préférentiellement, le diamètre externe de la première portion cylindrique 541 est inférieure au diamètre externe de la seconde portion cylindrique 542. Le diamètre externe de la seconde portion cylindrique 542 est inférieur au diamètre externe de la troisième portion cylindrique 543. Ainsi, le carter 54a présente un premier épaulement entre la première portion cylindrique 541 et la seconde portion cylindrique 542 et un second épaulement entre la deuxième portion cylindrique 542 et la troisième portion cylindrique 543.

Le carter 54a présente en outre une première face radiale 546 qui s'étend dans un plan radial par rapport à l'axe de révolution Y. La première face radiale 546 est agencée à l'intérieur de la première portion cylindrique 541. Elle est opposée au plateau de la pompe 54.

Selon l'invention, le carter 54a présente une conduite hydraulique 540 pour le passage du fluide dans la pompe 54. Préférentiellement, le carter 54a présente une première conduite hydraulique 540 et une seconde conduite hydraulique (non visible) pour le passage du fluide communiqué par les pistons. La ou chaque conduite hydraulique 540 présente un passage interne qui débouche dans l'intérieur de la première portion cylindrique 541. La ou chaque conduite hydraulique 540 traverse la première face radiale 546 de la pompe 54. La ou chaque conduite hydraulique 540 est en communication hydraulique avec la chambre d'admission.

Le fluide est acheminé jusqu'à l'actionneur 46 par le biais de l'unité de transfert 56. En effet, le carter 54a de la pompe 54 est fixe en rotation tandis que l'actionneur 46 est mobile en rotation autour de l'axe longitudinal X. L'unité de transfert 56 assure donc le transfert du fluide de la pompe 54 vers l'actionneur 46 qui sont respectivement dans un repère fixe et tournant.

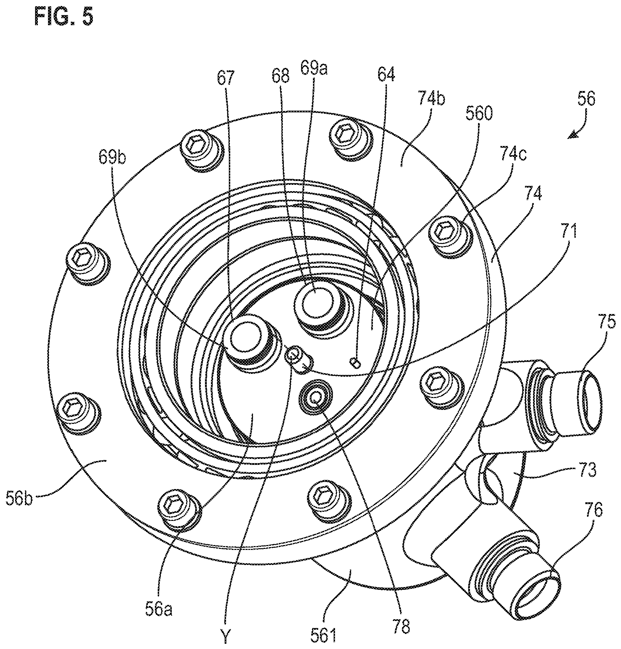

Comme visible sur les figures 4 et 5, l'unité de transfert 56 comprend un bloc de transfert 56a hydraulique et une enveloppe 56b recouvrant le bloc de transfert 56a.

Le bloc de transfert 56a est entièrement logé à l'intérieur de l'enveloppe 56b. Le bloc de transfert 56a est par ailleurs fixé au carter 54a. Plus particulièrement, le bloc de transfert 56a est monté directement et fixement sur le carter 54a.

Le bloc de transfert 56a présente un corps cylindrique centré sur l'axe de révolution Y. Le corps cylindrique présente une première partie cylindrique 562 et une seconde partie cylindrique 563. La première partie cylindrique 562 présente un diamètre externe inférieur au diamètre externe de la première partie cylindrique 562. La première partie cylindrique 562 présente en outre un filetage externe. Le bloc de transfert 56a présente en outre une deuxième face radiale 560 et troisième face radiale 561 opposée à la deuxième face radiale 560. Les première, seconde et troisième faces radiales 546, 560, 561 sont parallèles entre elles. La deuxième face radiale 560 est agencée à l'extrémité de la première partie cylindrique 562.

Préférentiellement, le bloc de transfert 56a est agencé au moins en partie à l'intérieur du carter 54a. Plus particulièrement, le bloc de transfert 56a est relié au carter 54a par vissage. La première partie cylindrique 562 est logée et vissée dans la première portion cylindrique 541 du carter 54a. Avantageusement, un écrou 70 est agencé autour de la première portion cylindrique 541.

La première face 546 du carter 54a coopère avec la deuxième face 560 du bloc de transfert 56a. La première face 546 présente une complémentarité de forme avec la deuxième face 560. Les première et deuxième faces 546, 560 présentent des diamètres externes égaux. Afin de renforcer la fixation du carter 54a sur le bloc de transfert 56a, limiter les efforts de cisaillement et centrer le carter 54a par rapport au bloc de transfert 56a et limiter les mouvements de l'un par rapport à l'autre, un pion 64 est agencé entre le bloc de transfert 56a et le carter 54a. Le pion 64 présente un axe parallèle à l'axe de révolution Y. Le pion 64 traverse de part en part les première et deuxième faces 546, 560. Il présente des extrémités agencées respectivement dans le bloc de transfert 56a et le carter 54a.

Afin d'améliorer la répartition des efforts de traction s'exerçant sur l'ensemble hydraulique 450, un tirant 71 est agencé dans le bloc de transfert 56a et s'étend longitudinalement dans le carter 54a. Le tirant 71 est centré dans le bloc de transfert 56a. Le tirant 71 présente une base radiale 71a parallèle aux deuxième et troisième faces radiales 560, 561. La base radiale 71a prend appuie sur la troisième face radiale 561 du bloc de transfert 56a. Le tirant 71a présente par ailleurs une extrémité opposée à la base radiale 71a qui s'étend dans le carter 54a.

Afin d'améliorer encore l'étanchéité de l'ensemble hydraulique 450, un joint d'étanchéité 71b est agencé autour du tirant 71 entre le bloc de transfert 56a et le carter 54a. Le joint d'étanchéité 71b est en appui sur la deuxième face radiale 560 du bloc de transfert 56a.

Selon l'invention, le bloc de transfert 56a comprend un canal interne 67 en communication fluidique avec la conduite 540. Préférentiellement, le bloc de transfert 56a comprend un premier canal interne 67 en communication fluidique avec la première conduite 540 et un second canal interne 68 en communication fluidique avec la seconde conduite.

Chaque canal interne 67, 68 présente un axe A parallèle à l'axe de révolution Y. Le premier canal interne 67 s'étend par exemple sur toute la longueur du corps cylindrique du bloc de transfert 56a. Chaque canal interne 67, 68 présente un passage interne débouchant dans la deuxième face radiale 560 du bloc de transfert 56a.

Préférentiellement, afin d'améliorer l'étanchéité de l'ensemble hydraulique 450, le premier canal interne 67 est raccordé fluidiquement à la première conduite hydraulique 540 par un premier raccord fluidique 69a. Le second canal interne 68 est raccordé fluidiquement à la seconde conduite hydraulique par un second raccord fluidique 69b. Le raccord fluidique 69a, 69b est préférentiellement un raccord de type male-male. Le raccord fluidique 69a, 69b comprend ainsi une première partie male 690 agencée dans le carter 54a et une seconde partie male 691 agencée dans le bloc de transfert 56a. Chaque partie male 690, 691 est vissée respectivement dans le carter 54a et le bloc de transfert 56a. Afin d'améliorer encore l'étanchéité de l'unité de transfert 450, un second joint annulaire 692 est agencé autour de chaque partie male 690, 691.

L'enveloppe 56b est guidée en rotation autour de l'axe de révolution Y et autour du bloc de transfert 56a. Pour réduire encore l'encombrement axial de l'ensemble hydraulique 450, l'enveloppe 56b est agencée au moins en partie autour du carter 54a. Par exemple, l'enveloppe 56b est guidée en rotation autour du carter 54a et du bloc de transfert 56a par un premier palier 72a à roulements agencé autour du carter 54a. Avantageusement, un second palier 72b à roulements permet de guider en rotation l'enveloppe 56b autour du bloc de transfert 56a et du carter 54a. Le second palier 72b à roulements est par exemple agencé autour du carter 54a. Les premier et second paliers 72b sont adjacents. Les premier et second paliers 72a, 72b sont par exemple agencés autour de la seconde portion cylindrique 542 du carter 54a. Les premier et second paliers 72a, 72b sont par exemple des paliers à roulements à billes, par exemple à une rangée de billes. Les premier et second paliers 72a, 72b sont par exemple montés en O.

Chaque palier 72a, 72b comprend une bague interne 720a, 720b portée par le carter 54a et une bague externe 721a, 721b portée par l'enveloppe 56b. Selon un exemple non représenté, le second palier 72b est agencé autour du bloc de transfert 56a.

Par ailleurs, l'écrou 70 permet d'exercer une précharge sur les premier et second paliers 72a, 72b et assure une rotation efficace de l'enveloppe 56b autour du carter 54a et du bloc hydraulique 56a.

L'enveloppe 56b comprend une région cylindrique 73 entourant le bloc de transfert 56a et une collerette 74 entourant le carter 54a. La région cylindrique 73 est préférentiellement évasée en direction de la collerette 74. La région cylindrique 73 présente un logement interne dans lequel est logé le bloc de transfert 56a. La collerette 74 présente une surface d'appui radiale 74a s'étendant dans un plan parallèle à l'axe de révolution Y. La surface d'appui radiale 74a est annulaire. La surface d'appui radiale 74a est avantageusement revêtue d'une plaque annulaire 74b La plaque annulaire 74b est en butée axiale contre le premier roulement 72a. La plaque annulaire 74b permet donc de maintenir axialement les premier et second paliers 72a, 72b entre le carter 54a et l'enveloppe 56a. La plaque annulaire 74b est relié à la collerette 74 par des boulons 74c. Les boulons 74c sont par exemple régulièrement répartis sur la collerette 74. Plus particulièrement, la plaque annulaire 74b est en butée contre la bague externe 721a du premier palier 72a. La bague interne 720a du premier palier 72a est en butée par exemple contre le deuxième épaulement du carter 54a.

L'enveloppe 56a présente en outre un premier port de sortie 75 communicant avec le premier canal interne 67 et avantageusement un second port de sortie 76 communicant avec le second canal interne 68. Les premier et second ports de sortie 75, 76 présentent chacun un passage interne qui débouche dans le bloc de transfert 56a. Les premier et second canaux internes 67, 68 présentent par exemple des orifices radiaux 67a, 68a en communication fluidique respectivement avec les premier et second ports de sortie 75, 76. Les orifices radiaux 67a, 68a présentent des axes s'étendant radialement par rapport à l'axe de révolution Y et l'axe A.

Les premier et second port de sortie 75, 76 présentent un axe s'étendant radialement par rapport à l'axe de révolution Y. Les premier et second ports de sortie 75, 76 s'étendent en saillie de l'enveloppe 56b et plus particulièrement de la région cylindrique 73. Les premier et second port de sortie 75, 76 forment par exemple un V.

Les premier et second ports de sortie 75, 76 sont raccordés à l'actionneur hydraulique 46. Le premier port de sortie 75 est par exemple raccordé à la seconde chambre 46b via la canalisation 46d et le second port de sortie 76 est par exemple raccordé à la première chambre 46a.

Afin d'améliorer l'étanchéité de l'ensemble hydraulique 450, un premier joint d'étanchéité dynamique 77a annulaire est agencé autour du bloc de transfert 56a. Avantageusement, des second, troisième et quatrième joints d'étanchéité dynamique 77b, 77c, 77d annulaires sont agencés autour du bloc de transfert 56a. Les joints d'étanchéité dynamique 77a, 77b, 77c, 77d sont agencés radialement entre le bloc de transfert 56a et l'enveloppe 56b. Les joints d'étanchéité dynamique 77a, 77b, 77c, 77d sont par exemple logés dans une rainure ménagée autour du corps du bloc de transfert 56a.

Afin de limiter les fuites de fluide en dehors de l'ensemble hydraulique 450, un drain 78 est agencé dans le bloc de transfert 56a. Le drain 78 s'étend longitudinalement dans le bloc de transfert 56a selon un axe parallèle à l'axe de révolution Y. Le drain 78 s'étend avantageusement sur toute la longueur du bloc de transfert 56a. Le drain 78 présente un passage interne qui débouche avantageusement dans le carter 54a de la pompe 54. Le passage interne du drain 78 est en outre en communication fluidique avec un espace annulaire situé entre le bloc de transfert 56a et l'enveloppe 56b. L'espace annulaire est par exemple situé entre les premier et second joints d'étanchéité dynamique 77a, 77b. L'espace annulaire comprend une gorge annulaire 78a qui est par exemple ménagée dans l'enveloppe 56b. La gorge annulaire 78a communique par exemple avec une entrée radiale 78b ménagée dans le bloc de transfert 56a et débouchant dans l'espace interne du drain 78. Le drain 78 permet ainsi de récupérer les fuites de fluide entre l'enveloppe 56b et le bloc de transfert 56a.

Une telle configuration de l'ensemble hydraulique 450 permet d'intégrer la pompe 54 dans un repère fixe de la turbomachine 1 afin d'augmenter la longévité de la pompe 54 qui n'est pas entrainée en rotation autour de l'axe longitudinal X sans augmenter l'encombrement axial et radial du module 3 de la turbomachine 1.

Aussi, l'ensemble hydraulique 450 constitue un ensemble étanche dans lequel les fuites sont limitées.

La pompe 54 est fluidiquement raccordée à un circuit hydraulique d'alimentation C. Le circuit hydraulique d'alimentation C est un circuit fermé. Il est indépendant d'un circuit de lubrification de la turbomachine 1 par exemple destiné à lubrifier le réducteur 33. Ceci permet donc de mettre en œuvre une pompe 54 de taille réduite tout en optimisant les capacités de la pompe 54. Typiquement une pompe 54 volumétrique d'une capacité de 350 bars et 12 000 tours par minute peut être utilisée. La pression et le débit du circuit hydraulique d'alimentation C peuvent être optimisés.

Le circuit hydraulique d'alimentation C comprend un accumulateur hydraulique 59. L'accumulateur hydraulique 59 constitue un réservoir de fluide sous pression configuré pour fournir un débit à la pompe 54. Le fluide est par exemple de l'huile sous pression. L'accumulateur hydraulique 59 constitue un réservoir avantageux dans le cadre de l'invention en ce qu'il permet de compenser les variations de volume du fluide dues à sa compressibilité et sa dilatation.

L'accumulateur hydraulique 59 est en communication fluidique avec la pompe 54.

Le circuit hydraulique d'alimentation C comprend un premier circuit C1 reliant la pompe 54 à l'actionneur hydraulique 46 et notamment à la première chambre 46a et un second circuit C2 reliant l'actionneur hydraulique 46 et notamment la seconde chambre 46b à la pompe 54. Le circuit hydraulique d'alimentation C comprend par exemple une vanne de sécurité 590 et un clapet anti-retour 591.

Le dispositif de commande 45 comprend en outre un moteur électrique 55. Le moteur électrique 55 permet d'alimenter en énergie électrique la pompe 54 afin d'assurer son fonctionnement. Le régime de la pompe 54 est déterminé par la quantité d'énergie électrique délivrée par le moteur électrique 55. Le moteur électrique 55 permet ainsi l'utilisation d'une pompe à cylindrée fixe réversible puisque c'est le moteur électrique 55 qui module la quantité de fluide que pourra délivrer la pompe 54 à l'actionneur hydraulique 46. Le moteur électrique est préférentiellement à commande vectorielle. Le moteur électrique 55 est par exemple réversible et à vitesse variable. Le moteur électrique 55 est par exemple un moteur électrique synchrone à aimants permanents. Selon un autre exemple, le moteur électrique 55 est un moteur asynchrone. Cependant cette alternative est moins avantageuse en ce que la vitesse ne pourrait plus être commandée par le moteur.

Le moteur électrique 55 comprend un arbre de puissance (non représenté) coopérant avec le rotor 54b de la pompe 54 et un stator 55a agencé autour de l'arbre de puissance. Le stator 55a entoure au moins en partie le rotor 54b de la pompe 54 et est centré sur l'axe de révolution Y. Le stator 55a est fixe en rotation par rapport à l'axe longitudinal X. Il est par exemple relié au porte-satellites.

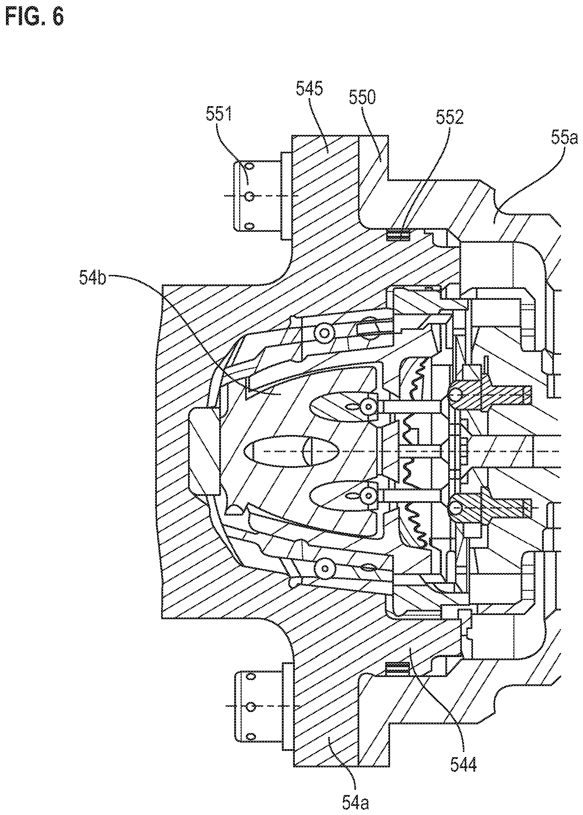

Comme mieux visible sur la figure 6, le stator 55a est fixé sur le carter 54a, par exemple par boulonnage. Le stator 55a présente par exemple une bride d'extrémité 550 annulaire fixé par des boulons de liaison 551 à la bride 545 du carter 54a. Un organe d'étanchéité 552 tel qu'un joint d'étanchéité statique est agencé radialement entre le carter 54a et le stator 55a. L'organe d'étanchéité 552 est par exemple agencé autour de la quatrième portion cylindrique 544. Cet organe d'étanchéité 552 est optionnel.

Le stator 55a est relié à un câble d'alimentation 66 électrique. Le câble d'alimentation 66 passe au sein du passage du troisième élément 38 du réducteur 33. Alternativement, le câble d'alimentation 66 passe au travers des satellites 39. Le câble d'alimentation 66 est relié à un dispositif d'alimentation électrique 61 qui est fixe en rotation par rapport à l'axe longitudinal X. Le dispositif d'alimentation électrique 61 est par exemple situé dans la turbomachine 1 ou dans un compartiment de l'aéronef. Ainsi, grâce à l'invention, aucun transfert électrique tournant n'est nécessaire pour alimenter en énergie électrique le moteur électrique 55. Ceci permet de réduire le poids et l'encombrement du module 3.

Avantageusement, le module 3 comprend en outre un circuit électronique de commande 60, qui est fixe en rotation autour de l'axe longitudinal X. Le circuit électronique de commande 60 est relié au moteur électrique 55 et notamment au stator 55a par l'intermédiaire du câble d'alimentation 66 pour le transport de l'énergie électrique. Le circuit électronique de commande 60 permet de moduler la puissance de la machine électrique 55 selon par exemple une information I1, I2 relative aux conditions de vol de l'aéronef et/ou l'état de la turbomachine et/ou la position des aubes 30 par rapport à leurs axes de calage C. Ainsi, le moteur électrique 55 n'est entrainé qu'au juste besoin et sa vitesse et son sens de rotation sont imposés par le circuit électronique de commande 60. Il n'est donc plus nécessaire selon l'invention de sur dimensionner le moteur électrique 55. Le circuit électronique de commande 60 est relié au dispositif d'alimentation électrique 61 par un câble électrique 62.

Avantageusement, le circuit électronique de commande 60 opère sous la commande d'une unité de commande 63 . L'unité de commande 63 est par exemple située dans la turbomachine 1 ou dans un compartiment de l'aéronef. L'unité de commande 63 est par exemple un calculateur numérique tel qu'un FADEC pour « Full Authority Digital Electronic Computer » en langue anglaise. L'unité de commande 63 est configuré pour transmettre un ordre O1 au circuit électronique de commande 60 en fonction d'une information I1, I2. L'information I1 est par exemple relative à l'état de la turbomachine 1 et/ou de l'aéronef. L'information I2 est par exemple relative à la position des aubes 30 par rapport à l'axe de calage C.

Avantageusement, le module 3 comprend un capteur 65. Le capteur 65 permet de mesurer une donnée et traduire la donnée pour transmettre l'information I1 relative à la position des aubes par rapport à l'axe de calage C qui est transmise au circuit électronique de commande 60 via l'unité de commande 63.

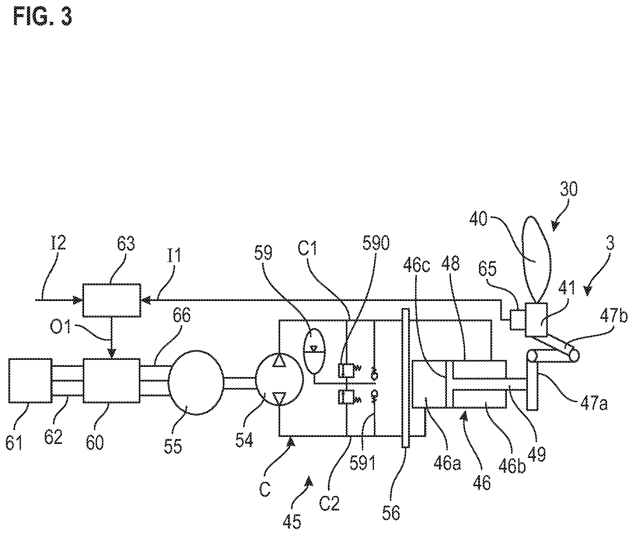

Le capteur 65 est par exemple un capteur de position. Le capteur de position est configuré pour mesurer la position du pied 41 de l'aube 30. Le capteur de position coopère par exemple avec le pied 41 comme illustré sur les figures 2 et 3. Le capteur 65 est par exemple de type électromagnétique.

Selon un autre mode de réalisation non représenté, le capteur 65 est par exemple un capteur linéaire de type LVDT pour « Linear Variable Differential Transformer » en langue anglaise. Le capteur 65 est configuré pour mesurer la position du corps mobile 49 de l'actionneur hydraulique 46. Il est par exemple agencé dans l'actionneur hydraulique 46.

Le capteur 65 fournit l'information I1 à l'unité de commande 63 qui va adresser au circuit électronique de commande 60 l'ordre O1 qui est fonction de cette information I1.

Le circuit électronique de commande 60 va alors alimenter en énergie électrique la machine électrique 55 en conséquence qui va agir sur la pompe d'alimentation 54. Selon l'ordre transmis au circuit électronique de commande 60, ce dernier module le régime de la machine électrique 55 afin d'adapter le régime de la pompe d'alimentation 54 selon le calage des aubes 30 souhaité.

L'ensemble hydraulique a été décrit en relation avec un module comprenant des aubes à calage variable. Néanmoins, l'ensemble hydraulique pourrait être mis en œuvre dans toute partie du moteur nécessitant un transfert de fluide d'une partie fixe vers une partie tournante.

## Revendications

1. Ensemble hydraulique (450) pour un moteur d'aéronef, l'ensemble comprenant:
- une pompe (54) comprenant un carter (54a) et un rotor (54b) agencé à l'intérieur du carter (54a), le carter (54a) présentant au moins une conduite hydraulique (540) pour le passage d'un fluide, et
- une unité de transfert (56) hydraulique comprenant :
un bloc de transfert (56a) hydraulique fixé au carter (54a) et comprenant un canal interne (67, 68) de passage du fluide qui communique avec la conduite hydraulique (540), et
une enveloppe (56b) qui recouvre le bloc de transfert (56a) et qui est guidée en rotation autour d'un axe de révolution (Y) et autour du bloc de transfert (56a), l'enveloppe (56b) présentant un port de sortie (75, 76) de fluide qui communique avec le canal interne (67, 68).

2. Ensemble selon la revendication précédente, **caractérisé en ce qu'**un pion (64) relie le carter (54a) et le bloc de transfert (56a).

3. Ensemble selon l'une quelconque des revendications précédentes, caractérisé en qu'au moins un joint d'étanchéité dynamique (77a, 77b, 77c, 77d) annulaire est agencé entre l'enveloppe (56b) et le bloc de transfert (56a).

4. Ensemble selon l'une quelconque des revendications précédentes, **caractérisé en ce que** l'enveloppe (56b) recouvre au moins en partie le carter (54a).

5. Ensemble selon la revendication précédente, **caractérisé en ce que** l'enveloppe (56b) est guidée en rotation par au moins un palier à roulements (72a, 72b) agencé autour du carter (54a).

6. Ensemble selon l'une quelconque des revendications précédentes, **caractérisé en ce que** le canal interne (67a, 68) est raccordé fluidiquement à la conduite hydraulique (540) par un raccord fluidique (69a, 69b) annulaire.

7. Ensemble selon l'une quelconque des revendications précédentes, **caractérisé en ce que** le bloc de transfert (56a) est relié au carter (54a) par vissage.

8. Ensemble selon l'une quelconque des revendications précédentes, **caractérisé en ce que** le carter (54a) comprend une seconde conduite hydraulique en communication fluidique avec un second canal interne (68) ménagé dans le bloc de transfert (56a), l'enveloppe (56b) présentant un second port de sortie (76) qui communique avec le second canal interne (68).

9. Ensemble selon l'une quelconque des revendications précédentes, **caractérisé en ce qu'**un drain (78) est agencé dans le bloc de transfert (56a) et débouche dans le carter (54a), le drain (78) étant en communication fluidique avec un espace annulaire situé entre l'enveloppe (56b) et le bloc de transfert (56a).

10. Module (3) pour un moteur d'aéronef, s'étendant autour d'un axe longitudinal (X) et comprenant :
- un moyeu (43) mobile en rotation autour de l'axe longitudinal (X),
- des aubes (30) portées par le moyeu (43), chacune de ces aubes (30) étant mobiles en rotation autour d'un axe de calage (C) s'étendant radialement par rapport à l'axe longitudinal (X), et
- un dispositif de commande (45) des aubes (30), ce dispositif de commande (45) comprenant :
un actionneur (46) hydraulique mobile en rotation autour de l'axe longitudinal (X) et configuré pour entrainer en rotation les aubes (30) autour de leurs axes de calage (C), et
un ensemble hydraulique (450) selon l'une quelconque des revendications précédentes, le carter (54a) de la pompe (54) étant fixe en rotation autour de l'axe longitudinal (X) et le port de sortie (75, 76) de l'enveloppe (56b) de l'unité de transfert (56) étant raccordé à l'actionneur (46) pour le transfert de fluide de la pompe (54) à l'actionneur (46).

## Patentansprüche

1. Hydraulikbaugruppe (450) für ein Triebwerk eines Luftfahrzeugs, wobei die Baugruppe umfasst:
- eine Pumpe (54), die ein Gehäuse (54a) und einen Rotor (54b) umfasst, der im Inneren des Gehäuses (54a) angeordnet ist, wobei das Gehäuse (54a) mindestens eine Hydraulikleitung (540) für den Durchlauf eines Fluids aufweist, und
- eine hydraulische Übertragungseinheit (56), umfassend:
einen hydraulischen Übertragungsblock (56a), der am Gehäuse (54a) fixiert ist und einen inneren Kanal (67, 68) zum Durchlauf des Fluids umfasst, der mir der Hydraulikleitung (540) kommuniziert, und
eine Hülle (56b), die den Übertragungsblock (56a) abdeckt und die drehend um eine Rotationsachse (Y) und um der Übertragungsblock (56a) herum geführt ist, wobei die Hülle (56b) einen Ausgangsanschluss (75, 76) für Fluid aufweist, der mit dem inneren Kanal (67, 68) kommuniziert.

2. Baugruppe nach dem vorstehenden Anspruch, **dadurch gekennzeichnet, dass** ein Zapfen (64) das Gehäuse (54a) und den Übertragungsblock (56a) verbindet.

3. Baugruppe nach einem der vorstehenden Ansprüche, **dadurch gekennzeichnet, dass** mindestens eine ringförmige dynamische Dichtung (77a, 77b, 77c, 77d) zwischen der Hülle (56b) und dem Übertragungsblock (56a) angeordnet ist.

4. Baugruppe nach einem der vorstehenden Ansprüche, **dadurch gekennzeichnet, dass** die Hülle (56b) das Gehäuse (54a) mindestens teilweise abdeckt.

5. Baugruppe nach dem vorstehenden Anspruch, **dadurch gekennzeichnet, dass** die Hülle (56b) durch mindestens ein Wälzlager (72a, 72b), das um das Gehäuse (54a) herum angeordnet ist, drehend geführt wird.

6. Baugruppe nach einem der vorstehenden Ansprüche, **dadurch gekennzeichnet, dass** der innere Kanal (67a, 68) strömungstechnisch durch einen ringförmigen Fluidanschluss (69a, 69b) an de Hydraulikleitung (540) angeschlossen ist.

7. Baugruppe nach einem der vorstehenden Ansprüche, **dadurch gekennzeichnet, dass** der Übertragungsblock (56a) durch Verschrauben mit dem Gehäuse (54a) verbunden ist.

8. Baugruppe nach einem der vorstehenden Ansprüche, **dadurch gekennzeichnet, dass** das Gehäuse (54a) eine zweite Hydraulikleitung in strömungstechnischer Kommunikation mit einem zweiten inneren Kanal (68), der im Übertragungsblock (56a) eingerichtet ist, umfasst, wobei die Hülle (56b) einen zweiten Ausgangsanschluss (76) aufweist, der mit dem zweiten inneren Kanal (68) kommuniziert.

9. Baugruppe nach einem der vorstehenden Ansprüche, **dadurch gekennzeichnet, dass** ein Abfluss (78) im Übertragungsblock (56a) angeordnet ist, und in das Gehäuse (54a) mündet, wobei der Abfluss (78) in strömungstechnischer Kommunikation mit einem Ringraum ist, der sich zwischen der Hülle (56b) und dem Übertragungsblock (56a) befindet.

10. Modul (3) für ein Triebwerk eines Luftfahrzeugs, das sich um eine Längsachse (X) herum erstreckt und umfasst:
- eine um die Längsachse (X) herum drehbewegliche Nabe (43),
- Schaufeln (30), die von der Nabe (43) getragen werden, wobei jede dieser Schaufeln (30) um eine Feststellpositionachse (C) herum drehbeweglich ist, die sich in Bezug auf die Längsachse (X) radial erstreckt,
- eine Steuervorrichtung (45) der Schaufeln (30), wobei diese Steuervorrichtung (45) umfasst:
eine hydraulische Betätigungsvorrichtung (46), die um die Längsachse (X) herum drehbeweglich ist und konfiguriert ist, um die Schaufeln (30) um ihren Feststellpositionachsen (C) herum in Drehung anzutreiben,
eine Hydraulikbaugruppe (450) nach einem der vorstehenden Ansprüche, wobei das Gehäuse (54a) der Pumpe (54) um die Längsachse (X) herum drehfest ist, und der Ausgangsanschluss (75, 76) der Hülle (56b) der Übertragungseinheit (56) zur Übertragung des Fluids von der Pumpe (54) zur Betätigungsvorrichtung (46) an die Betätigungsvorrichtung (46) angeschlossen ist.

## Claims

1. A hydraulic assembly (450) for an aircraft engine, the assembly comprising:
- a pump (54) comprising a casing (54a) and a rotor (54b) arranged inside the casing (54a), the casing (54a) having at least one hydraulic pipe (540) for the passage of a fluid, and
- a hydraulic transfer unit (56) comprising:
a hydraulic transfer block (56a) attached to the casing (54a) and comprising an internal channel (67, 68) for the passage of the fluid which communicates with the hydraulic pipe (540), and
an envelope (56b) which covers the transfer block (56a) and which is guided in rotation about an axis of revolution (Y) and about the transfer block (56a), the envelope (56b) having a fluid outlet port (75, 76) that communicates with the internal channel (67, 68).

2. The assembly according to the preceding claim, **characterised in that** a pin (64) connects the casing (54a) and the transfer block (56a).

3. The assembly according to any one of the preceding claims, **characterised in that** at least one annular dynamic seal (77a, 77b, 77c, 77d) is arranged between the envelope (56b) and the transfer block (56a).

4. The assembly according to any one of the preceding claims, **characterised in that** the envelope (56b) at least partially covers the casing (54a).

5. The assembly according to the preceding claim, **characterised in that** the envelope (56b) is guided in rotation by at least one rolling bearing (72a, 72b) arranged around the casing (54a).

6. The assembly according to any one of the preceding claims, **characterised in that** the internal channel (67a, 68) is fluidically connected to the hydraulic pipe (540) by an annular fluidic connection (69a, 69b).

7. The assembly according to any one of the preceding claims, **characterised in that** the transfer block (56a) is connected to the casing (54a) by screwing.

8. The assembly according to any one of the preceding claims, **characterised in that** the casing (54a) comprises a second hydraulic pipe in fluid communication with a second internal channel (68) formed in the transfer block (56a), the envelope (56b) having a second outlet port (76) which communicates with the second internal channel (68).

9. The assembly according to any one of the preceding claims, **characterised in that** a drain (78) is arranged in the transfer block (56a) and opens into the casing (54a), the drain (78) being in fluid communication with an annular space situated between the envelope (56b) and the transfer block (56a).

10. A module (3) for an aircraft engine, extending around a longitudinal axis (X) and comprising:
- a hub (43) movable in rotation about the longitudinal axis (X),
- vanes (30) carried by the hub (43), each of these vanes (30) being movable in rotation about a pitch axis (C) extending radially with respect to the longitudinal axis (X), and
- a control device (45) for controlling the vanes (30), this control device (45) comprising:
a hydraulic actuator (46) movable in rotation about the longitudinal axis (X) and configured to rotate the vanes (30) about their pitch axes (C), and
a hydraulic assembly (450) according to any one of the preceding claims, the casing (54a) of the pump (54) being stationary in rotation about the longitudinal axis (X) and the outlet port (75, 76) of the envelope (56b) of the transfer unit (56) being connected to the actuator (46) for the transfer of fluid from the pump (54) to the actuator (46).
